# EUROPEAN PATENT SPECIFICATION

(11) **EP 2 452 735 B1**
(45) Date of publication and mention of the grant of the patent: **16.10.2013**
(21) Application number: 12154414.2
(22) Date of filing: 22.08.2005
(51) Int. Cl.: C02F 1/28, C11D 7/08, C11D 7/26, C11D 11/00

(54) **Process for in-situ cleaning of drinking water filtration media**
Verfahren zur In-Situ-Reinigung von Trinkwasserfilteranlagen
Procédé de nettoyage in situ de médias de filtration d'eau potable

(30) Priority: 24.08.2004 US 926272
(43) Date of publication of application: 16.05.2012
(62) Divisional of application: 05772386.8
(73) Proprietor: BLUE EARTH LABS, LLC, Las Vegas, Nevada 89118 (US)
(72) Inventor: Reimann-Philipp, Ulrich, Norman, Oklahoma 73072 (US); Zwanziger, Wolfgang Friedrich, Oklahoma City, OK 73170 (US); Schulhoff, Jeffrey, Oklahoma City, OK 73162-4904 (US)
(74) Representative: Schiweck, Weinzierl & Koch

(56) References cited:
- WO-A-93/14181
- DE-U1- 29 805 333
- US-A- 5 776 876
- US-A- 6 139 756
- US-A1- 2002 058 605
- US-A1- 2004 105 781

## Description

### FIELD OF THE INVENTION

The present invention is generally directed toward a cleaning process. More specifically, the present invention is directed toward a process for cleaning granular water filtration media, such as various types of sand, anthracite coal or activated carbon.

### BACKGROUND OF THE INVENTION

Filtration is an essential step in the treatment of drinking and industrial water supplies. Filtration is carried out to remove contaminants which are either introduced with the source water or are produced during the treatment process and which can affect water quality. Most commonly large-scale filtration involves passing the water either through granular filter media, such as various types of sand, anthracite coal, granular activated carbon or combinations thereof arranged in layers in a filter media bed.

Contaminants removed during filtration accumulate within a granular filter media bed. Over time, this accumulation leads to increased filter backpressure (measured by increased head loss), increased turbidity of the flow-through or in the worst case scenario, to breakthrough of contaminants. Regular backwashing is used to remove accumulated filtrate in an effort to maintain filter performance and capacity.

However, like every surface in contact with water, filter media particles will over time accumulate deposits of biological and non-biological material which cannot be removed by backwashing and can significantly interfere with the filter's function. Thus, it is important to clean the filter bed not only of the loose particles removable by backwashing but also of these surface deposits.

Depending on the water source and environmental conditions, these surface deposits on the filter particles, can consist predominantly of organic matter (biofilm), metal oxides, or calcium carbonate scale. Heavy fouling or scaling will eventually reduce filter performance. The consequences can be higher backwash frequency, reduced flow-rates, increased water turbidity, breakthrough of contaminants or a combination of these effects. If the deposits are not removed, the filter performance will decline below tolerable levels and filter media exchange becomes necessary.

However, an exchange of the filtration media is very expensive in terms of filtration media and downtime cost and may not be a practical maintenance solution for water treatment installations which are exclusive to a number of consumers and have only a single filtration bed. Thus, maintenance procedures allowing for the cleaning of the filtration media as an alternative replacement are required.

Mechanical methods of filtration media cleaning include filter bed aeration during backwash and spraying water on top of the filter bed to disperse soft aggregates. This does not remove persistent surface deposits such as biofilm and scale. Chemical treatments include washing the media in strong acids and bases, sometimes in combination with surfactants. These chemical treatments can be satisfactory for certain types of contamination, such as calcium carbonate scale. However, mixed deposits, which include metal oxides and biological films, are either not removed efficiently or require highly corrosive and hazardous cleaning agents which are difficult to use and may leave residue not acceptable in drinking water processing installations. This generates a need for alternative cleaning procedures, and products, which are sufficiently efficient and convenient to present an alternative to media replacement.

Prior art filtration media cleaning methods of the chemical treatment type generally include the steps of applying an aqueous solution of a strong acid or base to the filtration media (see for example DE 29805333 U1). However, the treatment liquid flows through the filtration media too quickly for the cleaning reaction to be completed. Therefore, the treatment liquid must be applied repeatedly, requiring vast amounts of treatment liquid, or the treatment liquid must be circulated through the filtration media until the clearing reaction is completed, requiring specialized and expensive circulation equipment. These approaches, although an alternative to extended plant shut-down for filter media replacement, do not offer an economical alternative to filter media replacement.

### SUMMARY OF THE INVENTION

It is an object of the present invention to provide an efficient and economical alternative to the prior art filtration media cleaning methods and products. The present invention provides a process for the removal of surface deposits from granular filter media as defined in claim 1. More particularly, the invention provides a process for the in-situ cleaning of filter media used in drinking water treatment systems, especially a product and process which is NSF certified for such use.

The invention provides a process for the *in-situ* cleaning of water filtration media contained within a filtration bed. The process includes the steps of applying a granular cleaner onto the filtration media while the media is located within the filtration bed and applying an activator compound thereafter for activation of the cleaning composition. The granular cleaner reacts in conjunction with the activator resulting in the cleaning of the media. After the cleaning has occurred, the residual cleaner and activator are washed away in a rinsing step along with any suspended and dissolved contamination which was removed from the filtration media. The granular cleaner is preferably wetted after application to dissolve the cleaner and initiate the cleaning reaction.

The activator is applied in liquid form. Preferably, the activator is applied as an aqueous solution. In a variant of the preferred embodiment of the process, the steps of applying the activator and wetting the cleaner are combined by applying the activator in aqueous solution.

Preferably, the step of wetting the granular cleaner is carried out by spraying water onto the cleaner or by filling the filtration bed with water until the cleaner is submerged. The step of rinsing the water filtration bed is preferably conducted through backwashing said filtration bed. The process preferably includes the further step of allowing the chemical reaction to proceed for at least 1 hour prior to rinsing the filtration bed. The rinsing step is preferably delayed until the dissolved cleaner has reached a bottom of the filtration bed.

In a further preferred embodiment, the process includes the additional steps of determining the degree of surface contamination of the filtration media and calculating the amount of granular cleaner to be applied for insuring removal of the surface contaminants. The determination of the degree of contamination preferably includes the steps of taking a representative core sample from the filtration media, the sample having a known volume, and the step of calculating the amount of cleaner includes the steps of measuring the amount of cleaner required for removal of the surface contaminants from the filtration media in the sample and extrapolating to the whole filtration bed by multiplying the measured amount of cleaner by the ratio of filtration bed volume/sample volume.

A suitable granular cleaner includes an acid component for dissolving scale and metal oxides on and removing biodeposits from the filtration media and optionally at least one component selected from the group of a free flow additive for preventing clumping of the cleaner, a surfactant for enhancing contact of the cleaner with the filtration media, an inhibitor for protecting exposed metal surfaces from corrosion by the acid component, and a dye. The cleaner is preferably in the form of a free-flowing powder with a particle size of ≤ 0.5mm for easy spreading of the cleaner on the filtration media.

In a preferred embodiment of the cleaner, the acid component is sulfamic acid. In another preferred embodiment, the granular cleaner includes at least one additional component selected from the group of citric acid, phosphoric acid, corrosion inhibitor, free-flow additive and surfactant. Preferably the granular cleaner includes the following components:

| Component | Volume (w/w) |
|---|---|
| sulfamic acid; | 50-99% |
| citric acid; | 0-10% |
| phosphoric acid; | 0-10% |
| corrosion inhibitor; | 0-10% |
| Free-flow additive; | 0-10% |
| surfactant; and | 0-10% |
| sodium bicarbonate | Balance |

In the process above, the activator used is an activated oxygen donor. For the purpose of this disclosure, the term activated oxygen donor defines compounds which in aqueous solution decompose to generate oxygen radicals. Numerous activated oxygen donors of this type are known and need not be listed in detail. The activated oxygen donor is preferably selected from peroxides, most preferably hydrogen peroxide, peracetic acid, precursors of peroxides, hydrogen peroxide and peracetic acid and combinations thereof. The activator is most preferably either 5-50% hydrogen peroxide, or 0.2 - 10% peracetic acid, or a combination of hydrogen peroxide and peracetic acid, with the balance being water.

In a preferred embodiment of the process of the invention, the activator can be in a liquid or dry state prior to its introduction into the filtration bed.

In another preferred embodiment of the process of the invention, the rinsing step is preferably carried out by a backwashing procedure.

Further objects and features of the present invention will be apparent to those skilled in the art upon reference to the accompanying drawings and upon reading the following description of the preferred embodiments.

### BRIEF DESCRIPTION OF THE DRAWINGS

Preferred embodiments of the invention will now be further described by way of example only and with reference to the attached drawings, wherein

FIG. 1 is a schematic flow diagram of a preferred process in accordance with the present invention;

FIG. 2 is a schematic flow diagram of a variant of the process of FIG. 1;

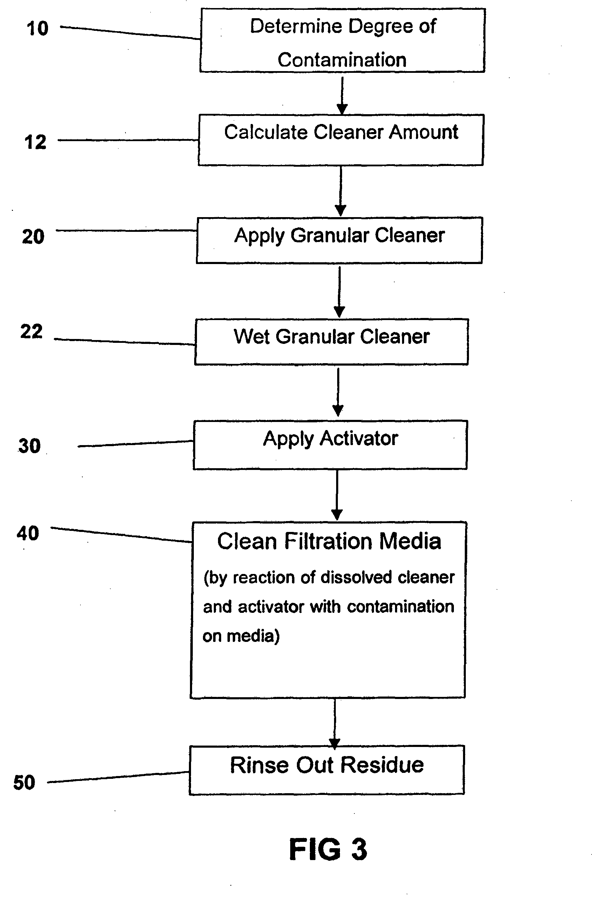

FIG. 3 is a schematic illustration of a filter bed being cleaned with the process of the invention and at commencement of the process of FIG. 1;

FIG. 4 is a schematic illustration of the filter bed of FIG. 3 at a later stage in the cleaning process; and

FIG. 5 illustrates an alternative method of applying the granular cleaner.

### DETAILED DESCRIPTION OF THE PREFERRED EMBODIMENTS

Before explaining the present invention in detail, it is to be understood that the invention is not limited to the preferred embodiments contained herein. The invention is capable of other embodiments and of being practiced or carried out in a variety of ways. It is to be understood that the phraseology and terminology employed herein are for the purpose of description and not of limitation.

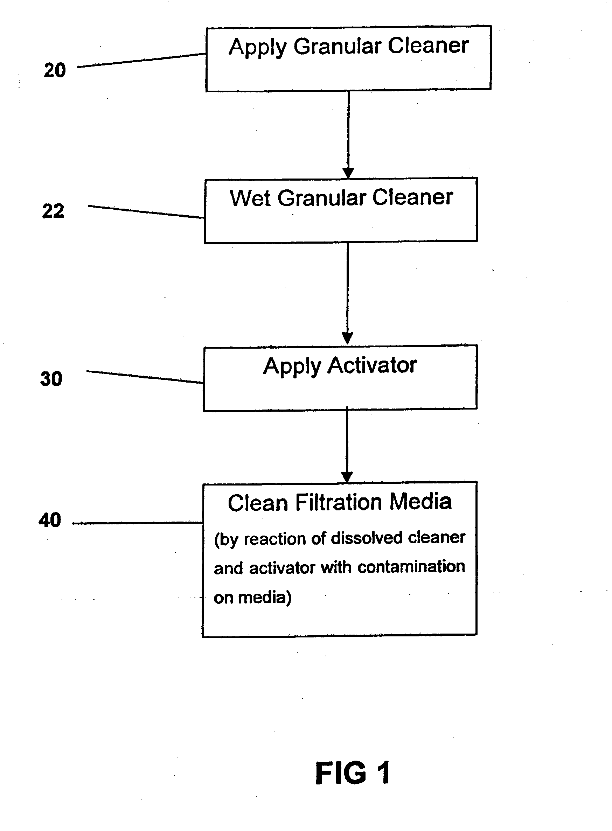

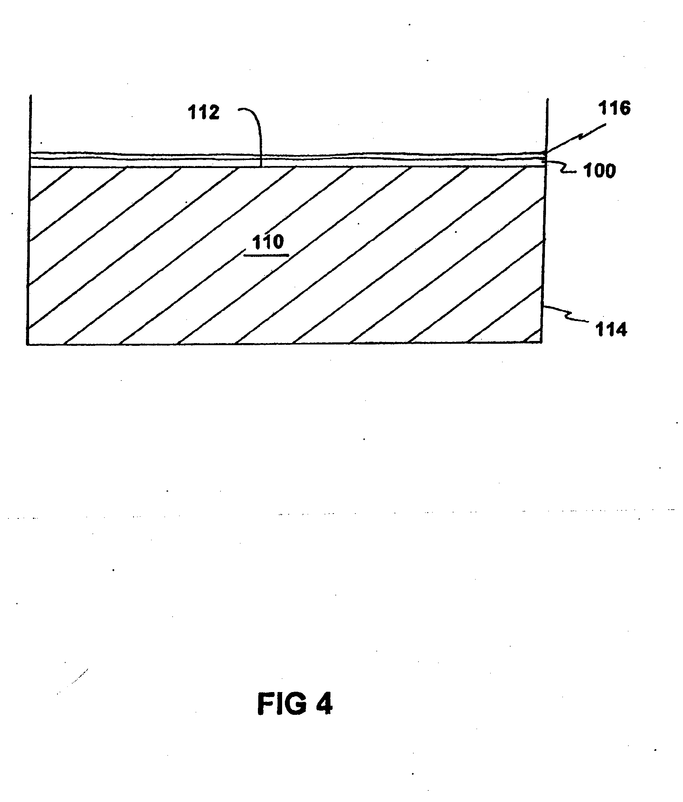

FIG. 1 is a schematic flow diagram of a preferred embodiment of a process in accordance with the invention for the cleaning of water filtration media 110 contained within a filtration bed 114 (see Fig. 4). In this embodiment, the process includes a first application step 20 in which a granular cleaner is applied to the water filtration media while the media is located within the filtration bed. In a wetting step 22, the granular cleaner is wetted with an aqueous medium to dissolve the cleaner and promote its vertical spread through the filtration media during the ensuing cleaning reaction. Thereafter, an activator is applied onto the granular cleaner in a third application step 30. In a reaction step 40, the cleaner chemically reacts in conjunction with the activator resulting in the cleaning of the media. The duration of reaction step 40 varies depending on the degree of contamination of the media. However, the reaction step 40 is preferably carried out for at least one hour, preferably the reaction step is conducted over night. Most preferably, the reaction step 40 is carried out until the dissolved cleaner has reached a bottom of the filtration bed and the filtration media is completely cleaned. The point in time at which the filtration media is completely cleaned can be determined by visual inspection to check for any foaming which would indicate an ongoing cleaning reaction and/or by measuring the supernatant pH or metal content.

The inventors of the present process surprisingly discovered that the automatic gradual advancement of the dissolved cleaner through the filtration media in combination with the even spreading of the cleaner on the top surface of the filtration bed completely obviates the need for circulation or re-circulation of the dissolved cleaner to ensure an even distribution of the dissolved cleaner during the reaction step. Agitation of the filtration bed during cleaning is also neither necessary nor desirable with the process in accordance with the invention. This provides the process of the current invention with significant economical and practical advantages.

After the cleaning step 40, any residual granular cleaner and activator are washed away along with the suspended and dissolved contamination which was removed from the water filtration media by rinsing the filtration media with water in a rinsing step 50. The rinsing step can be carried out by spraying water onto the filtration media or by backwashing the filter bed. Backwashing is the preferred method of rinsing the filtration media. The rinsing step 50 is best carried out until all residual cleaner and activator and all dissolved and suspended contaminants such as scale, metal oxides and bio-contaminants have been removed. Completion of the rinsing step 50 can be determined by monitoring the turbidity, pH and dissolved metal content of the backwash water, for example. Since the filtration bed is not disturbed during the cleaning step, no settling period is required and the filtration bed can be returned to production after the rinsing step, the same as after a regular backwash cycle, providing the process of the invention with yet another advantage over prior art processes involving agitation of the filtration media during cleaning.

In the first application step 20, the granular cleaner is preferably evenly spread on the top layer of the filtration media to promote an even distribution and concentration of the dissolved cleaner during the reaction step 40. In the wetting step 30, the filtration bed is filled with water until all the filter material is submerged. This can be done by initiating a slow backwash flow until the desired water level is reached. The backwash flow should be maintained sufficiently low to avoid agitation of the filter bed and mixing of the granular cleaner with the filter material. For filters with very light filter material which may be easily agitated by backwashing, the wetting step is preferably carried out by spraying water onto the cleaner.

An even wetting of the cleaner over the whole area of the filtration media top surface is desirable in order to achieve an even dissolution and concentration of the cleaner throughout. The same applies for the activator, which is preferably evenly spread on the granular cleaner to ensure the same ratio of cleaner to activator throughout the filtration bed during the reaction step 40. The activator is applied in liquid form. Applying the activator as an aqueous solution allows the compression of the steps of applying the activator and wetting the cleaner into a single second application step. In another preferred embodiment of the process of the invention the filtration bed is completely drained prior to the granular cleaner application step 20.

The rinsing step 50 is preferably conducted through backwashing of the filtration bed.

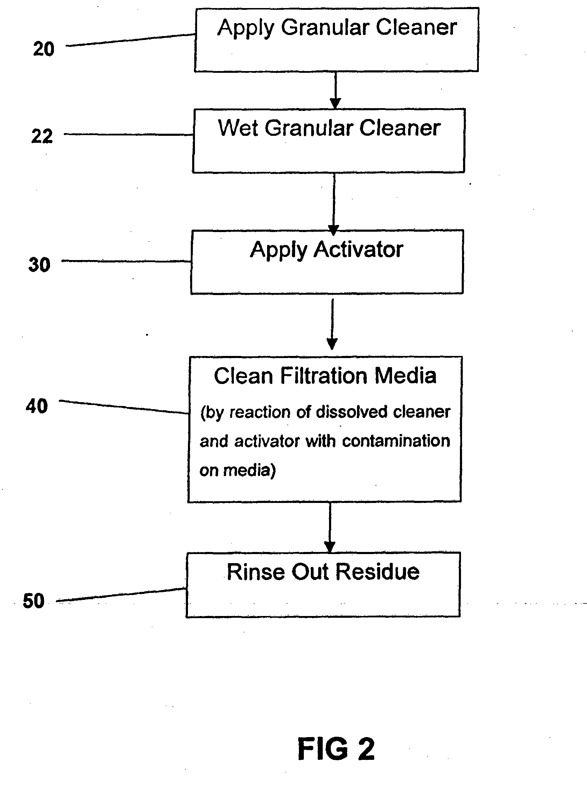

A further preferred embodiment of the process of the invention as illustrated in Fig. 2 includes an analysis step 10 for determining the degree of surface contamination of the filtration media and a calibration step 12 for calculating the amount of granular cleaner to be applied for ensuring that the whole filtration media are exposed to unreacted cleaner during the cleaning step 40. The analysis step 10 preferably includes the step of taking a representative core sample from the filtration media, the sample having a known volume, while the calibration step 12 preferably includes the steps of first measuring the amount of cleaner required for substantially complete removal of the surface contaminants from the filtration media in the sample and then extrapolating to the amount required for the whole filter bed by multiplying the measured amount of cleaner by the ratio of filtration bed volume/sample volume. Preferably, the core sample is taken in an area of maximum or at least average contamination and represents a cylindrical sample extending from the top to the bottom of the filtration bed. Adjusting the amount of cleaner used to the respective contamination conditions provides the process of the invention with a significant economical advantage, since substantially no excess cleaner will be used, reducing the cost of the cleaning materials as well as the cost of disposing any unreacted cleaner and activator. Furthermore, less backwashing is required, reducing the time required for the rinsing step 50 and, thus, the overall cleaning process. This is very important to the operator of drinking water treatment facilities who is desirous to achieve the shortest down times possible.

A suitable granular cleaner for carrying out the process of claim 1 includes an acid component for dissolving scale and metal oxides on and removing biodeposits from the filtration media; and at least one additional component selected from the group of a free flow additive for preventing clumping of the cleaner, a surfactant for reducing surface tension and enhancing contact of the cleaner with the filtration media, an inhibitor for protecting exposed metal surfaces from corrosion by the acid component, and a coloring agent.

The acid component of the granular cleaner is either sulfamic acid or a combination of a major amount of sulfamic acid with a minor amount of a granular acid, such as phosphoric acid, sodium bisulfate, or citric acid. The acid component is preferably substantially free of hydrochloric acid. In the preferred embodiment, the additional components are at least one of citric acid, phosphoric acid, corrosion inhibitor, free-flow additive and surfactant.

Numerous free flow additives applicable for use in the granular cleaner of the present invention are commercially available. However, it is preferable to use inert free flow additives. Free flow additives preferred for use in a granular cleaner of the invention are fumed silicas which adsorb to the cleaner particles to inhibit clumping and are NSF certifiable for use in drinking water processing installations.

Surfactants useful for inclusion in a granular cleaner in accordance with the invention can be selected for the group of anionic, cationic, non-ionic and amphoteric surfactants in granular form. Useful anionic surfactants include, by way of non-limiting example, alkali metal salts, ammonium salts, amine salts, aminoalcohol salts, fatty acid salts. Particularly preferred surfactants are isopropanol and isobutanol. Surfactants which are NSF certifiable for use in drinking water processing installations are preferred.

Corrosion inhibitors useful for inclusion in a granular cleaner in accordance with the invention can be selected from the group of nitrogen containing organic compounds, such as amines, quaternary ammonium compounds, heterocyclic nitrogen compounds, urea, thiourea, amide, or mixtures thereof. The most preferred inhibitors are Inhibitor 60S, commercially available from Thoma, Inc. and Rodine 102, from Parker Amchem.

Numerous coloring agents useful for inclusion in the granular cleaner of the invention are commercially available. The preferred coloring agent is a dye commercially available under the name Phylam Acid Red LX-6515 from Phylam Chemicals.

In the process above, the activator used is an activated oxygen donor, preferably selected from hydrogen peroxide, peracetic acid, precursors of hydrogen peroxide and peracetic acid and combinations thereof. Examples of granular precursors of activated oxygen donors are sodium percarbonate and BSC 8080, available from Buckman Laboratories. The activator is preferably either 5-50% hydrogen peroxide, or 0.2 - 10% peracetic acid with the balance being water. The activator can be in a liquid or dry state prior to its introduction into the filtration bed.

The cleaner in accordance with the invention preferably includes the following components at the indicated amounts:

| Component | Volume w/w |
|---|---|
| sulfamic acid; | 50-100% |
| citric acid; | 0-30% |
| phosphoric acid; | 0-10% |
| sodium bisulfate | 0-10% |
| corrosion inhibitor; | 0-10% |
| free-flow additive; | 0-10% |
| surfactant | 0-10% |

As will be readily understood from the indicated volume ranges, all components having a volume range with a lower value of 0 are optional components.

The mineral or organic acid components of the granular cleaner composition are present in their respective crystalline form.

Although the granular cleaner composition is preferably in the form of a free-flowing powder with a particle size of ≤ 0.5mm for ease of spreading of the cleaner on the filtration media, the granular cleaner may also be in the form of compressed pellets or granules, especially for application in the form of a slurry, as will be described in more detail further below.

Exemplary formulations illustrating preferred embodiments of the above general cleaner formulation are described in detail in the following:

### Example 1

| Component | Volume w/w |
|---|---|
| sulfamic acid | 85.5% |
| citric acid | 5.0% |
| phosphoric acid | 5.0% |
| corrosion inhibitor | 1.5% |
| Free-flow additive | 1.0% |
| surfactant | 2.0% |

### Example 2

| Component | Volume w/w |
|---|---|
| sulfamic acid | 65.5% |
| citric acid | 25.0% |
| phosphoric acid | 5.0% |
| corrosion inhibitor | 1.5% |
| Free-flow additive | 1.0% |
| surfactant | 2.0% |

### Example 3

| Component | Volume w/w |
|---|---|
| sulfamic acid | 65.5% |
| citric acid | 25.0% |
| sodium bisulfate | 5.0% |
| corrosion inhibitor | 1.5% |
| Free-flow additive | 1.0% |
| surfactant | 2.0% |

The constituents of the granular cleaners described herein are known in the art and are commercially available from various sources including those described in McCutcheon's Functional Materials (Vol.2), North American Edition, 1991; and in Kirk-Othmer, Encyclopedia of Chemical Technology, 3rd edition, Vol. 22, the contents of which are herein incorporated by reference. For any particular cleaner, the optional components used should be compatible with all other ingredients included in the cleaner.

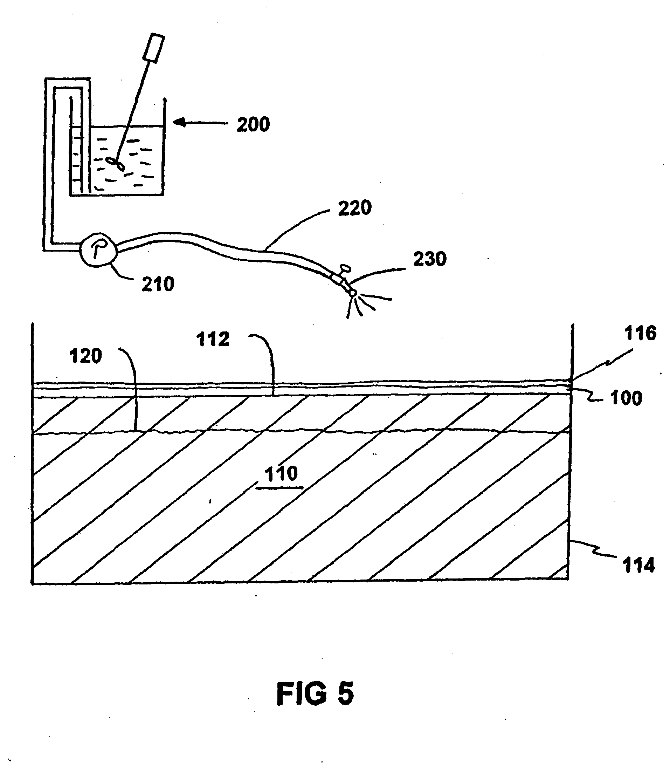

As shown in FIG. 4, the granular cleaner 100 in a preferred embodiment of the process of the invention is spread evenly on the top surface 112 of the filtration media 110 in the filtration bed 114 during the first application step 10 (see FIG. 1). The cleaner 100 is wetted to achieve dissolution of the cleaner. The activator 116 is then evenly spread on top of the cleaner 100. The dissolved cleaner and the activator together move downward through the filtration bed 114. This generates a moving cleaning front 120 of concentrated acid and activator as shown in FIG. 5 which illustrates the filtration bed 114 during the reaction step 40 (see FIG. 1). The cleaning front 120 is the front edge of the dissolved cleaner/activator mixture. The cleaning front 120 normally advances through the filtration bed 114 at a constant speed which is dependent on the type and particle size of the filtration media 110, the degree of media contamination and the cleaning chemical dosage. In stratified filter beds including several strata of different filtration media, the speed of advance of the cleaning front 120 may change from one stratum to the next, again depending on the properties of the filtration media in the adjacent strata. Not only will the cleaning front 120 and, thus, the dissolved cleaner 100 and the activator 116, automatically move through the filtration bed 114, the even application of both together with the movement of the mixture around the filtration media particles ensures an even concentration and admixture of both components. Furthermore, the advancement of the cleaning front 120 is slowed sufficiently by the friction created during movement of the mixture though the filtration bed 114 to achieve more than sufficient residence time of the mixture on the filtration media particles to ensure a full cleaning thereof. Moreover, any unreacted mixture will continue to move downward until it comes in contact with a contaminated filtration media surface or the filtration bed 114 is completely cleaned. This provides several significant advantages over the prior art. The circulation equipment required with the prior art cleaning processes using liquid cleaning compositions to ensure complete spread of the cleaner and sufficient residence time is obviated with the process of the present invention, resulting in a significant economical advantage. Significant overdosing of the cleaning compounds as required in the prior art cleaning processes to ensure all contamination is removed is not necessary with the process of the invention, since all of the cleaning mixture will 'drain' from the filtration bed, which means it will automatically move through the whole bed and can get used up completely. Additional advantages of the present method over the prior art are a minimized corrosion of metal parts and minimized formation of hazardous fumes.

For large filtration beds, where it may be difficult to reach all locations of the bed's top surface, it may be challenging to spread the granular cleaner or granular cleaner composition in a dry form as described above. In those situations, the granular cleaner can be applied to the filtration media in the form of a slurry. The slurry is prepared by mixing the dry granular cleaner or cleaner composition with approximately the same volume of water at a mixing station 200 (see Fig.5) and then spread on the top surface of the filtration bed by way of a pressure pump 210 connected to the mixing station 200, delivery hoses 220 emanating from the pump 210 and an optional spreader nozzle 230. The granular cleaner shipping containers can be used as the mixing station 220 by filling the containers with water to the top. Various types of slurry mixing and pumping equipment are commercially available and need not be described in more detail herein.

While the invention has been described with a certain degree of particularity, it is understood that the invention is not limited to the embodiments set forth herein for purposes of exemplification, but is to be limited only by the scope of the attached claims.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A process for removing surface contaminants from water filtration media (110) contained in a water filtration bed (114) including granular activated carbon (GAC), the method comprising the steps of:
applying a cleaner (100) in granular form onto said water filtration media (110), while the water filtration media (110) is located within the filtration bed (114);
applying an active oxygen donor (116) in liquid form to said water filtration media (110) in said water filtration bed (114), to initiate at least one chemical reaction between the cleaner (100), the active oxygen donor (116), and the surface contaminants on the water filtration media (110), causing at least one of suspension and dissolution of contaminants received from the water filtration media (110);
after initiating of said at least one chemical reaction, rinsing the water filtration media (110) in the water filtration bed (114) with water for removing any of residual cleaner, residual active oxygen donor, suspended contaminants, and dissolved contaminants from the water filtration media (110).

2. A process according to claim 1, wherein said surface contaminants comprise organic material in combination with calcium carbonate or at least one metal oxide.

3. A process according to claim 1, wherein said surface contaminants comprise organic material in combination with calcium carbonate and at least one metal oxide.

4. A process according to any one of claims 1 to 3, wherein said cleaner (100) in granular form comprises sulfamic acid.

5. A process according to any one of claims 1 to 4, wherein said active oxygen donor comprises at least one of hydrogen peroxide and peracetic acid.

6. A process according to any one of claims 1 to 5, further comprising wetting said cleaner (100) in granular form.

7. A process according to any one of claims 1 to 6, wherein said cleaner (100) is supplied to the top (112) of the water filtration bed (114).

8. A process according to any one of claims 1 to 5, wherein said cleaner (100) is supplied to the top (112) of the water filtration bed (114) and is wetted with an aqueous medium.

9. A process according to any one of claims 1 to 6, further comprising use of a pump (210) to supply the cleaner (100) to the top (112) of the water filtration bed (114) in the form of a slurry.

10. A process according to any one of claims 1 to 5, wherein said at least one chemical reaction is performed for at least one hour prior to said rinsing of the water filtration media (110).

11. A process according to any one of claims 1 to 10, wherein said rinsing of the water filtration media (110) comprises backwashing of the water filtration media (110).

12. A process according to any one of claims 1 to 11, wherein said cleaner (100) comprises at least one of a surfactant, a free flow additive, a corrosion inhibitor, and a coloring agent.

13. A process according to any one of claims 1 to 12, further comprising determining a degree of surface contamination of the water filtration media (110), and calculating an amount of cleaner (100) to be applied for insuring removal of the surface contaminants.

14. A process according to claim 13 wherein the step of determining the degree of contamination includes the steps of taking a representative core sample from the water filtration media (110), the sample having a known volume, and the step of calculating the amount of cleaner (100) includes the steps of measuring the amount of cleaner (100) required for removal of the surface contaminants from the water filtration media (110) in the sample and multiplying the measured amount of cleaner by a ratio of filtration bed volume / sample volume.

15. A process according to claim 14, wherein the core sample is a cylindrical sample that extends from the top to the bottom of the water filtration media (110).

## Patentansprüche

1. Verfahren zum Entfernen von Oberflächenverunreinigungen von einem Wasserfiltermedium (110), das in einem Wasserfilterbett (114) enthalten ist, mit granulärer Aktivkohle (GAC), wobei das Verfahren die folgenden Schritte umfasst:
Aufbringen eines Reinigungsmittels (100) in granulärer Form auf das Wasserfiltermedium (110), während sich das Wasserfiltermedium (110) im Filterbett (114) befindet;
Aufbringen eines Aktiv-Sauerstoff-Donors (116) in flüssiger Form auf das Wasserfiltermedium im Wasserfilterbett (114), um mindestens eine chemische Reaktion zwischen dem Reinigungsmittel (100), dem Aktiv-Sauerstoff-Donor (116) und den Oberflächenverunreinigungen auf dem Wasserfiltermedium (110) einzuleiten, wodurch mindestens eine Suspendierung oder Auflösung der Verunreinigungen aus dem Wasserfiltermedium (110) bewirkt wird;
nach dem Einleiten der mindestens einen chemischen Reaktion, Spülen des Wasserfiltermediums (110) im Wasserfilterbett (114) mit Wasser zur Entfernung von jeglichem restlichen Reinigungsmittel, restlichem Aktiv-Sauerstoff-Donator, suspendierten Verunreinigungen und gelösten Verunreinigungen aus dem Wasserfiltermedium (110).

2. Verfahren nach Anspruch 1, wobei die Oberflächenverunreinigungen organisches Material in Kombination mit Calciumcarbonat oder mindestens einem Metalloxid enthalten.

3. Verfahren nach Anspruch 1, wobei die Oberflächenverunreinigungen organisches Material in Kombination mit Calciumcarbonat und mindestens einem Metalloxid enthalten.

4. Verfahren nach einem der Ansprüche 1 bis 3, wobei das Reinigungsmittel (100) in granulärer Form Sulfaminsäure umfasst.

5. Verfahren nach einem der Ansprüche 1 bis 4, wobei der Aktiv-Sauerstoff-Donor mindestens Wasserstoffperoxid oder Peressigsäure umfasst.

6. Verfahren nach einem der Ansprüche 1 bis 5, ferner umfassend Benetzen des Reinigungsmittels (100) in granulärer Form.

7. Verfahren nach einem der Ansprüche 1 bis 6, wobei das Reinigungsmittel (100) von der Oberseite (112) des Wasserfilterbetts (114) zugeführt wird.

8. Verfahren nach einem der Ansprüche 1 bis 5, wobei das Reinigungsmittel (100) von der Oberseite (112) des Wasserfilterbetts (114) zugeführt und mit einem wässrigen Medium benetzt ist.

9. Verfahren nach einem der Ansprüche 1 bis 6, ferner umfassend die Verwendung einer Pumpe (210), um das Reinigungsmittel (100) von der Oberseite (112) des Wasserfilterbetts (114) in Form einer Aufschlämmung zuzuführen.

10. Verfahren nach einem der Ansprüche 1 bis 5, wobei mindestens eine chemische Reaktion für mindestens eine Stunde vor dem Spülen des Wasserfiltermediums (110) durchgeführt wird.

11. Verfahren nach einem der Ansprüche 1 bis 10, wobei das Spülen des Wasserfiltermediums (110) Rückspülung des Wasserfiltermediums (110) umfasst.

12. Verfahren nach einem der Ansprüche 1 bis 11, wobei das Reinigungsmittel (100) mindestens ein Tensid, ein Fließhilfsmittel, einen Korrosionsinhibitor oder ein Färbemittel umfasst.

13. Verfahren nach einem der Ansprüche 1 bis 12, ferner umfassend Bestimmen eines Grades an Oberflächenverschmutzung des Wasserfiltermediums (110), und Berechnen einer einzusetzenden Menge an Reinigungsmittel (100) zum Sicherstellen der Entfernung der Oberflächenverunreinigungen.

14. Verfahren nach Anspruch 13, wobei der Schritt des Bestimmens eines Grades an Verunreinigung, die Schritte der Entnahme einer repräsentativen Kern-Probe aus dem Wasserfiltermedium (110) einschließt, wobei die Probe ein bekanntes Volumen hat, und der Schritt des Berechnens der Menge an Reinigungsmittel (100) die Schritte des Messens der erforderlichen Menge an Reinigungsmittel (100) zum Entfernen der Oberflächenverunreinigungen aus dem Wasserfiltermedium (110) in der Probe und Multiplizieren der gemessenen Menge an Reinigungsmittel mit einem Verhältnis von Filtrationsbett / Probenvolumen einschließt.

15. Verfahren nach Anspruch 14, wobei die Kern-Probe eine zylindrische Probe ist, die von der Oberseite bis zum Boden des Wasserfiltermediums (110) reicht.

## Revendications

1. Procédé pour enlever les contaminants de surface d'un matériau filtrant de l'eau (110) contenu dans un lit de filtration d'eau (114) comprenant du charbon actif en grain (GAC), le procédé comprenant les opérations consistant à :
appliquer un agent nettoyant (100) sous forme granulaire sur ledit matériau filtrant de l'eau (110), pendant que le matériau filtrant de l'eau (110) est situé dans le lit de filtration (114) ;
appliquer un donneur d'oxygène actif (116) sous forme liquide audit matériau filtrant de l'eau (110) dans ledit lit de filtration d'eau (114), pour amorcer au moins une réaction chimique entre l'agent nettoyant (100), le donneur d'oxygène actif (116) et les contaminants de surface sur le matériau filtrant de l'eau (110), pour causer la suspension et/ou la dissolution des contaminants reçus du matériau filtrant de l'eau (110) ;
après l'amorçage de ladite ou desdites réactions chimiques, rincer le matériau filtrant de l'eau (110) dans le lit de filtration d'eau (114) avec de l'eau pour enlever tout agent nettoyant résiduel, tout donneur d'oxygène actif résiduel, les contaminants en suspension et les contaminants dissous du matériau filtrant de l'eau (110).

2. Procédé selon la revendication 1, dans lequel lesdits contaminants de surface comprennent une matière organique combinée à du carbonate de calcium ou à au moins un oxyde métallique.

3. Procédé selon la revendication 1, dans lequel lesdits contaminants de surface comprennent une matière organique combinée à du carbonate de calcium et à au moins un oxyde métallique.

4. Procédé selon l'une quelconque des revendications 1 à 3, dans lequel ledit agent nettoyant (100) sous forme granulaire comprend l'acide sulfamique.

5. Procédé selon l'une quelconque des revendications 1 à 4, dans lequel le donneur d'oxygène actif comprend le peroxyde d'hydrogène et/ou l'acide peracétique.

6. Procédé selon l'une quelconque des revendications 1 à 5, comprenant en outre le mouillage dudit agent nettoyant (100) sous forme granulaire.

7. Procédé selon l'une quelconque des revendications 1 à 6, dans lequel ledit agent nettoyant (100) est fourni au dessus (112) du lit de filtration d'eau (114).

8. Procédé selon l'une quelconque des revendications 1 à 5, dans lequel ledit agent nettoyant (100) est fourni au dessus (112) du lit de filtration d'eau (114) et est mouillé avec un agent aqueux.

9. Procédé selon l'une quelconque des revendications 1 à 6, comprenant en outre l'utilisation d'une pompe (210) pour fournir l'agent nettoyant (100) au dessus (112) du lit de filtration d'eau (114) sous la forme d'une boue liquide.

10. Procédé selon l'une quelconque des revendications 1 à 5, dans lequel la ou les réactions chimiques sont effectuées pendant au moins une heure avant ledit rinçage du matériau filtrant de l'eau (110).

11. Procédé selon l'une quelconque des revendications 1 à 10, dans lequel ledit rinçage du matériau filtrant de l'eau (110) comprend le lavage à contre-courant du matériau filtrant de l'eau (110) .

12. Procédé selon l'une quelconque des revendications 1 à 11, dans lequel ledit filtre (100) comprend au moins l'un des agents suivants : un agent tensio-actif, un additif d'écoulement libre, un inhibiteur de corrosion et un agent colorant.

13. Procédé selon l'une quelconque des revendications 1 à 12, comprenant en outre la détermination d'un degré de contamination de surface du matériau filtrant de l'eau (110), et le calcul d'une quantité d'agent nettoyant (100) à appliquer pour assurer l'enlèvement des contaminants de surface.

14. Procédé selon la revendication 13, dans lequel l'étape de détermination du degré de contamination comprend les étapes de prise d'un échantillon de carotte du matériau filtrant de l'eau (110), l'échantillon ayant un volume connu, et l'étape de calcul de la quantité d'agent nettoyant (100) comprenant les étapes de mesure de la quantité d'agent nettoyant (100) requise pour l'enlèvement des contaminants de surface du matériau filtrant de l'eau (110) dans l'échantillon et de multiplication de la quantité d'agent nettoyant mesurée par un rapport du volume de lit de filtration / volume d'échantillon.

15. Procédé selon la revendication 14, dans lequel l'échantillon de carotte est un échantillon cylindrique qui s'étend du dessus au fond du matériau filtrant de l'eau (110) .
